Europäisches Patentamt

European Patent Office

Office européen des brevets

(11) Veröffentlichungsnummer: **0 321 780 B1**

(12) **EUROPÄISCHE PATENTSCHRIFT**

(45) Veröffentlichungstag der Patentschrift: **04.11.92**

(21) Anmeldenummer: **88120412.7**

(22) Anmeldetag: **07.12.88**

(51) Int. Cl.5: **F16K 31/60**

(54) **Handhebel für Eingriffmisch-Ventile.**

(30) Priorität: **19.12.87 DE 3743212**

(43) Veröffentlichungstag der Anmeldung:
**28.06.89 Patentblatt 89/26**

(45) Bekanntmachung des Hinweises auf die
Patenterteilung:
**04.11.92 Patentblatt 92/45**

(84) Benannte Vertragsstaaten:
**AT CH DE FR GB IT LI NL SE**

(56) Entgegenhaltungen:
**EP-A- 0 172 329**
**DE-A- 3 327 776**
**DE-A- 3 426 740**

(73) Patentinhaber: **FRIEDRICH GROHE AKTIENGE-**
**SELLSCHAFT**
**Hauptstrasse 137**
**W-5870 Hemer(DE)**

(72) Erfinder: **Gottwald, Adolf**
**An der Egge 19**
**W-5860 Iserlohn(DE)**
Erfinder: **Köster, Wilfried**
**In den Feldern 10**
**W-5750 Menden 2(DE)**

## Beschreibung

Die Erfindung bezieht sich auf eine Handhebelbetätigungsvorrichtung für Eingriffmischventile nach dem Oberbegriff des Anspruchs 1.

Bei einem bekannten Eingriffmischventil dieser Art (DE-A-33 37 968) ist ein Handhebel als Bügel ausgebildet, wobei zwei parallel angeordnete Ringbögen des Hebelarms tangential durch entsprechend geformte Öffnungen der Mantelhülse des Hebelkopfes hindurchgleiten und im äußeren Bereich zu einem Griffstück zusammengeführt sind. Hierbei kann es als nachteilig angesehen werden, daß die beiden Hebelarme im Bereich der Durchführung durch die Wandung des Hebelkopfgehäuses jeweils mit einem Bogen um den Mittelpunkt der Schwenkachse des inneren Hebels versehen sind, so daß diese Bögen im Blickfeld des Benutzers liegen.

Ferner ist eine Handbetätigungseinrichtung für ein Eingriffmischventil bekannt (EP-A-0 172 329) bei der der Schwenkbogen des Handhebels mit der Lagerachse zusammenfällt. Diese Ausbildung erfordert aber eine besonders ausgebildete Ventilkartusche.

Der Erfindung liegt die Aufgabe zugrunde, eine andere Ausbildung des als Bügelgriff geformten Handhebels und des Hebelkopfgehäuses zu schaffen, wobei eine möglichst schlanke Gestalt des Hebelkopfgehäuses beibehalten werden soll.

Diese Aufgabe wird erfindungsgemäß durch die kennzeichnenden Merkmale des Anspruchs 1 gelöst.

Weitere Ausgestaltungen der Erfindung sind in den Ansprüchen 2 bis 6 angegeben.

Aus der DE-PS 28 56 300 ist es ferner bekannt, beide Arme des das Kopfteil umfassenden Handhebels mit einer auf einer Drehachse im Kopfteil gelagerten Welle, die tangential aus dem Hebelkopfgehäuse herausgeführt ist, zu verbinden. Eine Übertragung dieser bekannten Einrichtung auf ein Eingriffmischventil nach dem Oberbegriff des Patentanspruchs 1, mit einem im Kartuschengehäuse schwenkbar gelagerten inneren Hebel, läßt sich aber bei unveränderter Kartuschenausbildung nicht realisieren bzw. führt zu einer nicht unerheblichen Vergrößerung des Durchmessers des Hebelkopfgehäuses, was aber einer ansprechenden Optik des Mischventils entgegenwirkt.

Die mit der Erfindung erzielten Vorteile bestehen im wesentlichen darin, daß bei einer harmonischen Anlenkung des Bügelgriffs an das Hebelkopfgehäuse, dieses relativ schlank ausgebildet werden kann, wobei an der in das Eingriffmischventil eingesetzten Ventilkartusche keinerlei Änderungen vorgenommen werden müssen. Darüber hinaus wird durch eine entsprechende flächige Ausbildung im Bereich der Durchtrittsöffnungen sichergestellt, daß die Durchtrittsöffnung in jeder Schwenkstellung vom Handhebel abgedeckt ist, so daß ein Eindringen von Schmutzwasser etc. in den Hebelkopf verhindert bzw. behindert wird.

Ein Ausführungsbeispiel der Erfindung ist in der Zeichnung dargestellt und wird im folgenden näher beschrieben. Es zeigt

Figur 1    ein Eingriffmischventil mit bügelförmigem Handgriff in Seitenansicht;

Figur 2    das Eingriffmischventil gemäß Figur 1 in Draufsicht;

Figur 3    das Mischventil gemäß Figur 1 in Vorderansicht, teilweise im Schnitt;

Figur 4    das Eingriffmischventil gemäß Figur 1 in Seitenansicht, teilweise im Schnitt;

Figur 5    eine Haube des Hebelkopfgehäuses nach Figur 1 in Seitenansicht;

Figur 6    die Haube gemäß Figur 5 um 90° gedreht;

Figur 7    ein Mantelteil des Hebelkopfgehäuses gemäß Figur 1 in Draufsicht;

Figur 8    das Mantelteil gemäß Figur 7 in Seitenansicht;

Figur 9    den Handhebel nach Figur 1 in Seitenansicht;

Figur 10    den Handhebel gemäß Figur 9 in Draufsicht.

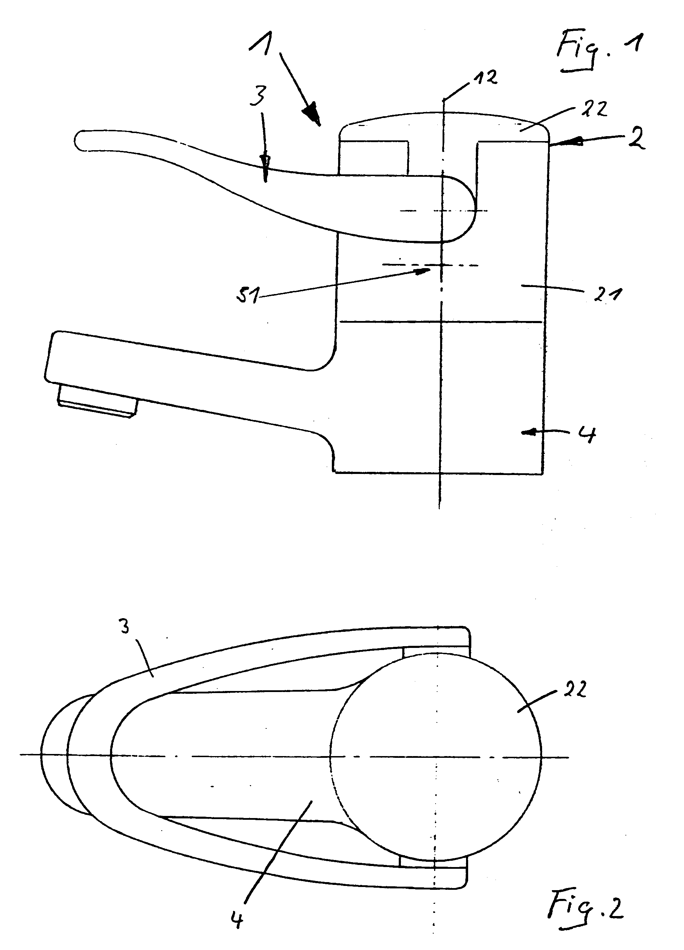

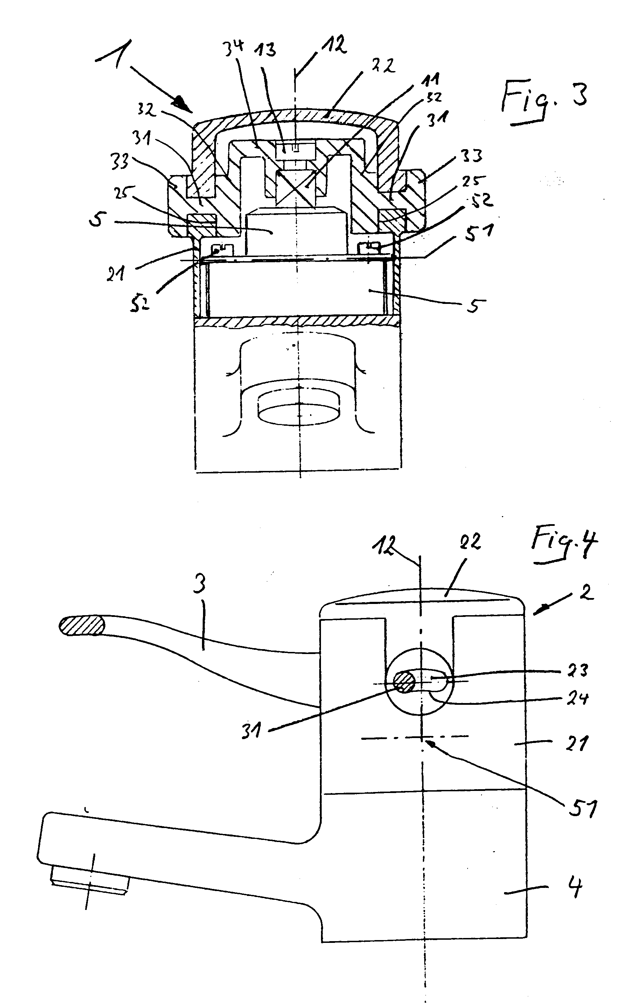

Das insbesondere in den Figuren 1 bis 4 gezeigte Eingriffmischventil besteht im wesentlichen aus einem Ventilgehäuse 4 mit in der Zeichnung nicht gezeigten Anschlüssen für Kalt- und Warmwasser, einem Kartuschengehäuse 5, in dem Keramikventilscheiben als Ventilglieder angeordnet sind und in der ein innerer Hebel 11 um eine Schwenklagerachse 51 verschwenkbar und um eine Drehachse 12 verdrehbar angeordnet ist. Durch ein Verschwenken um die Schwenklagerachse 51 wird dabei die Gesamtdurchflußmenge, durch ein Drehen um die Drehachse 12 das Mischungsverhältnis von Kalt- und Warmwasser mit dem in der Kartusche gekapselt angeordneten Mischventil eingestellt.

Oberhalb des Ventilgehäuses 4 ist in einem Teilbereich des Kartuschengehäuses 5 die Handhebelbetätigungseinrichtung 1 ausgebildet. Die Handhebelbetätigungseinrichtung 1 besteht dabei aus einem Hebelkopfgehäuse 2 und einem Handhebel 3.

Das Hebelkopfgehäuse ist zweiteilig ausgebildet und besteht aus einem Mantelteil 21 und einer Haube 22, während der Handhebel 3 einstückig ausgebildet ist und formschlüssig mit dem inneren Hebel 11 verbunden ist, wobei zur Sicherung eine von oben zugängliche Schraube 13 vorgesehen ist.

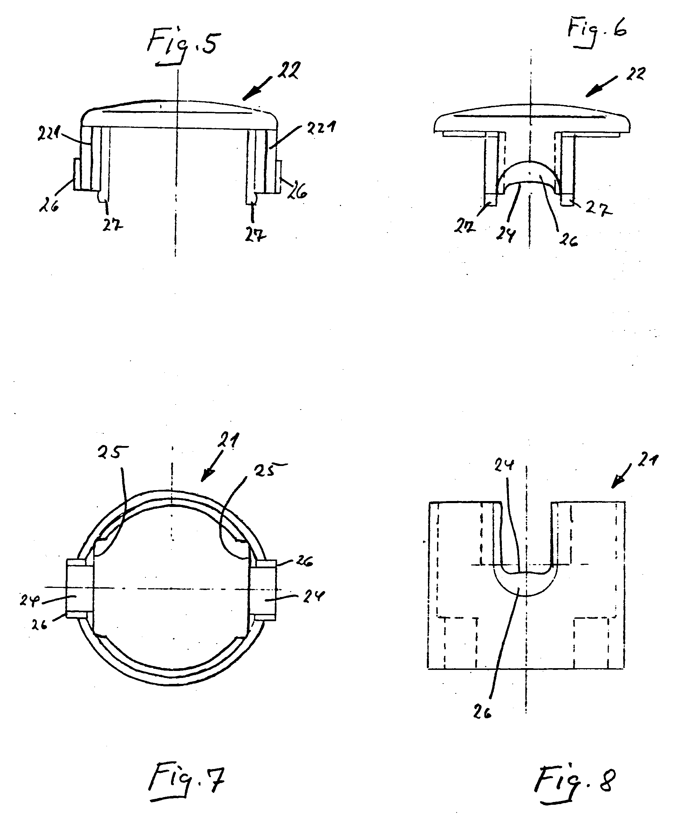

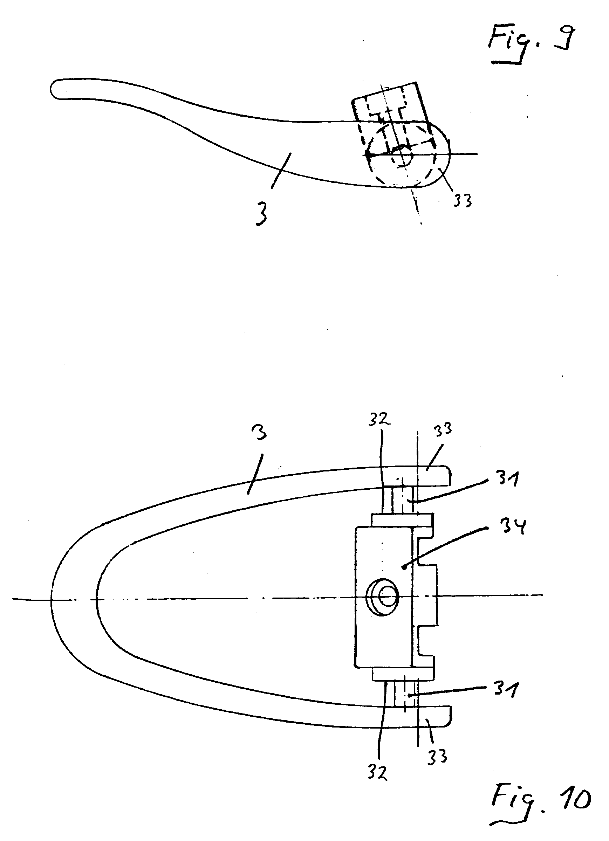

Der Mantelteil 21 des Hebelkopfgehäuses 2, wie er insbesondere in den Figuren 7 und 8 dargestellt ist, besteht im wesentlichen aus einer zylindrischen Hülse, an der von der oberen Stirnseite aus zwei gegenüberliegende Fenster 211 ausgebildet sind, deren Grund jeweils eine Hälfte einer Durchtrittsöffnung 23 bildet. An der Haube 22 sind entsprechende Paßstücke 221 angeformt, wie es insbesondere in Figur 5 und 6 der Zeichnung dargestellt ist. Die Paßstücke 221 sind dabei in die Fenster 211 einschiebbar, wobei die Stirnseiten der Paßstücke 221 so ausgebildet und geformt sind, daß sie die zweite Hälfte der Durchtrittsöffnungen 23 bilden. In der Stecklage bildet die Haube 22 die stirnseitige Abdeckung des Mantelteils 21 und verschließt die Fenster 211 bis auf die Durchtrittsöffnungen 23. Zur Sicherung in der Stecklage sind an der Haube 22 Schnappzungen 27 ausgebildet, mit der die Haube 22 an dem Mantelteil 21 verrastbar ist.

Der Handhebel 3, wie er insbesondere in den Figuren 9 und 10 dargestellt ist, ist einstückig im Zinkdruckgußverfahren hergestellt, wobei die parallel geführten Arme des Bügelteils tangential an dem zylindrischen Teil des Hebelkopfgehäuses 2 herangeführt ist. Zwischen dem gabelförmigen Bügelteil ist ein Quersteg 34 ausgebildet, in dem zentral der innere Hebel 11 formschlüssig aufgenommen ist. Verkröpft zu dem Quersteg 34 sind an beiden Seiten Wangen 32 ausgebildet, an denen jeweils ein im Querschnitt Kreisform aufweisender Zapfen 31 senkrecht zur Drehachse 12 angeformt ist und die Verbindung zum bügelförmigen Teil des Handhebels 3 herstellen. Der Handhebel 3 ist dabei mit seinen Wangen 32 bis in die Nähe der Befestigungsschrauben 52 des Kartuschengehäuses 5 heruntergezogen, um einen möglichst kurzen Schwenkbogen zum Verschwenken des Handhebels 3 um die Schwenklagerachse 51 zu erreichen. Die Durchtrittsöffnungen 23 weisen daher die Form eines Ringbogenstücks 24 auf, wie es insbesondere aus Figur 4 ersichtlich ist. Das Zentrum des Ringbogens wird dabei von der Schwenklagerachse 51 gebildet.

Die Montage und die Funktion der vorstehend beschriebenen Handhebelbetätigungseinrichtung erfolgt in folgender Weise:
Zunächst wird das Kartuschengehäuse 5 mit den Ventilgliedern und dem inneren Hebel 11 mit den Befestigungsschrauben 52 am Ventilgehäuse 4 befestigt. Danach kann der Mantelteil 21 über das Kartuschengehäuse 5 gestreift und mit seiner Stirnfläche am Ventilgehäuse 4 aufgelagert werden. Nunmehr wird der Handhebel 3 mit seinem Quersteg 34 auf den im Querschnitt etwa quadratisch ausgebildeten, vorstehenden inneren Hebelarm 11 aufgeschoben und mit der Schraube 13 gesichert. Hierbei ist der Handhebel 3 mit seinen Zapfen 31 im Grund der Fenster 211 aufgelagert. Nunmehr kann die Haube mit ihren Paßstücken 221 in die Fenster 211 eingeführt und in der Stecklage mit den Schnappzungen 27 verrastet werden, so daß nunmehr die beiden Zapfen 31 jeweils in einer ringbogenförmigen Durchtrittsöffnung 23 gelagert sind. Der Ringbogen 24 ist dabei so dimensioniert, daß der Handhebel 3 von seiner Schließstellung, wie sie in der Figur 4 dargestellt ist, durch Anheben bzw. Verschwenken um die Schwenklagerachse 51 in eine Position gebracht werden kann, in der der volle Durchfluß durch das Mischventil freigegeben wird.
Soll dagegen das Mischungsverhältnis geändert werden, so erfolgt ein Verschwenken des Handhebels 3 um die Drehachse 12. Hierzu sind, wie es insbesondere aus Figur 7 zu entnehmen ist, im Bereich der Durchtrittsöffnungen 23 an der Innenseite des Hebelkopfgehäuses 2 parallel ausgebildete Anlageflächen 25 vorgesehen, an denen jeweils eine Wange 32 des Querstegs 34 mit einer etwa kreisförmigen Stirnfläche anliegt und somit eine formschlüssige Mitnahme des Hebelkopfgehäuses 2 bei der Schwenkbewegung um die Drehachse 12 gewährleistet ist.

Zur harmonischen Anlenkung der beiden Arme des bügelförmigen Teils des Handhebels 3 und zur Verhinderung des Eindringens von Spritzwasser in das Innere des Hebelkopfgehäuses 2 sind an der Außenseite im Bereich der Durchtrittsöffnungen 23 etwa kreisförmige Anflächungen 26 angeformt, wobei der Handhebel 3 im Bereich der Einführungen in das Hebelkopfgehäuse 2 entsprechend geformte Verbreiterungen 33 aufweist.

**Patentansprüche**

1.  Handhebelbetätigungseinrichtung für Eingriffmischventile mit wenigstens einem in einer Kartusche angeordneten, in zwei Freiheitsgraden bewegbaren Ventilglied zur separaten Bestimmung des Mischungsverhältnisses und der Gesamtdurchflußmenge, wobei ein mit dem Ventilglied gekoppelter, im Kartuschengehäuse (5) gelagerter innerer Hebel (11) vorgesehen ist, der mit einem um zwei senkrecht zueinander im Ventilgehäuse (4) angeordnete Drehachsen verschwenkbaren, als Bügel ausgebildeten Handhebel (3) fest verbunden und durch den Mantel eines um die erste Drehachse auf dem Ventilgehäuse (4) drehbar gehaltenen Hebelkopfgehäuse (2) herausgeführt ist, so daß beim Verschwenken des inneren Hebels (11) mit dem Handhebel (3) um die Schwenklagerachse (51), der aus dem Mantel des Hebelkopfgehäuses (2) herausgeführte Teil einen Schwenkbogen um die Schwenklagerachse 51 durchläuft, dadurch gekennzeichnet, daß der Handhebel (3) oberhalb der Schwenklagerachse (51) des inneren Hebels (11) diametral zu beiden Seiten durch den Mantel des Hebelkopfgehäuses (2) herausgeführt ist, wobei die Durchtrittsöffnungen (23) jeweils als Ringbogenstück (24) zur Schwenklagerachse (51) ausgebildet sind.

2. Handhebelbetätigungseinrichtung nach Anspruch 1, dadurch gekennzeichnet, daß der Handhebel (3) senkrecht zur ersten Drehachse (12) Zapfen (31) hat, mit denen er durch den Mantel des Hebelkopfgehäuses (2) geführt ist, wobei der Querschnitt der Zapfen (31) eine Kreisfläche oder eine entsprechend dem Ringbogenstück (24) geformte Fläche aufweist.

3. Handhebelbetätigungseinrichtung einem der Ansprüche 1 oder 2, dadurch gekennzeichnet, daß das Hebelkopfgehäuse (2) aus einem Mantelteil (21) und einer Haube (22) gebildet ist, wobei im Mantelteil (21) zwei gegenüberliegende Fenster (211) ausgebildet sind, deren Grund jeweils die eine Hälfte der ringbogenförmigen Durchtrittsöffnungen (23) bildet, und an der Haube (22) entsprechende Paßstücke (221) angeformt sind, die jeweils in ein Fenster (211) einschiebbar sind und mit ihrer Stirnseite die zweite Hälfte der Durchtrittsöffnungen (23) formen, wobei im Bereich der Durchtrittsöffnungen (23) an der Innenseite des Hebelkopfgehäuses (2) parallel ausgebildete Anlageflächen (25) für entsprechend geformte Wangen (32) des Handhebels (3) vorgesehen sind, so daß eine formschlüssige Verbindung zwischen Handhebel (3) und Hebelkopfgehäuse (2) bei der Schwenkbewegung um die Drehachse (12) besteht.

4. Handhebelbetätigungseinrichtung nach einem der Ansprüche 1 bis 3, dadurch gekennzeichnet, daß im Bereich der Durchtrittsöffnungen (23) an der Außenseite etwa kreisförmige Anflächungen (26) an dem Mantel des Hebelkopfgehäuses (2) ausgebildet sind und der Handhebel (3) im Bereich der Einführungen in das Hebelkopfgehäuse (2) entsprechend geformte Verbreiterungen (33) aufweist, so daß in jeder Schwenkstellung die Durchtrittsöffnungen (23) abgedeckt sind.

5. Handhebelbetätigungseinrichtung nach einem der Ansprüche 1 bis 4, dadurch gekennzeichnet, daß die Haube (22) des Hebelkopfgehäuses (2) mittels Schnappzungen (27) in der Stecklage mit dem Mantelteil (21) verrastbar ist.

6. Handhebelbetätigungseinrichtung nach einem der Ansprüche 1 bis 5, dadurch gekennzeichnet, daß der bügelförmige Handhebel (3) einstückig, vorzugsweise im Zinkdruckgußverfahren hergestellt ist.

**Claims**

1. Hand lever operating device for single-grip mixing valves having at least one valve member for separately determining the mixing ratio and the overall quantity flowing through, which valve member is arranged in a cartridge and is movable with two degrees of freedom, wherein an internal lever (11) which is coupled to the valve member and mounted in the cartridge housing (5) is provided, which internal lever is rigidly connected to a hand lever (3) in the form of a yoke which can be swivelled about two swivelling axes arranged perpendicular to each other in the valve housing (4) and which internal lever is guided through the barrel of a lever head housing (2) which is mounted on the valve housing (4) so as to be rotatable about the first swivelling axis, so that, when the internal lever (11) is swivelled about the swivel bearing axis (51) by the hand lever (3), the portion guided out of the lever head housing (2) passes through a swivel arc about the swivel bearing axis (51), characterised in that the hand lever (3) is guided out of the barrel of the lever head housing diametrically at both sides and above the swivel bearing axis (51) of the internal lever (11), the passages (23) each being in the form of an annular arc segment (24) about the swivel bearing axis (51).

2. Hand lever operating device according to claim 1, characterised in that the hand lever (3) has pins (31) at right angles to the first swivelling axis (12), by means of which pins it is guided through the barrel of the lever head housing (2), the cross-section of the pins (31) having a circular area or an area of a shape corresponding to the annular arc segment (24).

3. Hand lever operating device according to claim 1 or claim 2, characterised in that the lever head housing (2) is composed of a barrel part (21) and a cap (22), there being formed in the barrel part (21) two mutually opposing windows (211), the bases of which each form the one half of the annular-arcuate passages (23), and corresponding fitting pieces (221) being integrally formed on the cap (22) which can each be inserted into one window (211) and form with their end faces the second half of the passages (23), there being provided in the region of the passages (23), on the inside of the lever head housing (2), parallel locating faces (25) for correspondingly shaped cheeks (32) of the hand lever (3), so that there is a positive connection between the hand lever (3) and the lever head housing (2) during the swivelling movement about the swivelling axis (12).

4. Hand lever operating device according to one of claims 1 to 3, characterised in that, in the region of the passages (23), on the outside, approximately circular flat regions (26) are formed on the barrel of the lever head housing (2) and the hand lever (3) has correspondingly shaped widened portions (33) in the region of the entries into the lever head housing (2), so that, in any swivelling position, the passages (23) are covered.

5. Hand lever operating device according to one of claims 1 to 4, characterised in that the cap (22) of the lever head housing (2) can be locked to the barrel part (21) in the inserted position by means of snap-in tongues (27).

6. Hand lever operating device according to one of claims 1 to 5, characterised in that the yoke-shaped hand lever (3) is manufactured in one piece, preferably in a zinc die-casting process.

**Revendications**

1. Dispositif d'actionnement par un levier à main pour des mitigeurs, avec au moins un organe disposé dans une cartouche et susceptible d'être déplacé selon deux degrés de liberté, pour déterminer séparément les proportions du mélange et le débit total, tandis qu'il est prévu un levier interne (11), monté dans le boîtier (5) de la cartouche et couplé avec l'organe, et qui est solidaire d'un levier à main (3) revêtant la forme d'un étrier susceptible de pivoter autour de deux axes de rotation perpendiculaires l'un à l'autre et disposés dans le boîtier (4) du mitigeur, et qui est guidé vers l'extérieur à travers l'enveloppe d'un boîtier (2) de tête de levier maintenu sur le boîtier (4) du mitigeur de façon à pouvoir tourner autour du premier axe de rotation, de sorte que lorsqu'on fait pivoter le levier interne (11) avec le levier à main (3) autour de l'axe (51) du palier de pivotement, la partie guidée vers l'extérieur hors de l'enveloppe du boîtier (2) de tête de levier parcourt un arc de pivotement autour de l'axe (51) du palier de pivotement, dispositif caractérisé en ce que le levier à main (3) est guidé vers l'extérieur, à travers l'enveloppe du boîtier (2) de tête de levier, diamétralement des deux côtés au dessus de l'axe (51) du palier de pivotement du levier interne (11), tandis que les orifices de traversée (23) revêtent respectivement la forme d'une partie d'arc annulaire (24) centrée sur l'axe (51) du palier de pivotement.

2. Dispositif d'actionnement par un levier à main selon la revendication 1, caractérisé en ce que le levier à main (3) a des tourillons (31) perpendiculaires au premier axe de rotation (12), grâce auxquels il est guidé à travers l'enveloppe du boîtier (2) de tête de levier, tandis que la section transversale de ces tourillons (31) a une surface circulaire ou une surface d'une conformation correspondant à la partie d'arc annulaire (24).

3. Dispositif d'actionnement par un levier à main selon une des revendications 1 ou 2, caractérisé en ce que le boîtier (2) de tête de levier est constitué par une partie d'enveloppe (21) et par un capot (22), tandis qu'il est prévu dans la partie d'enveloppe (21) deux fenêtres (211) placées l'une en face de l'autre, dont le fond forme respectivement l'une des moitiés des orifices de traversée (23) en forme d'arc annulaire, et que sur le capot (22) sont formées des parties d'ajustement correspondantes (221), qui sont susceptibles d'être respectivement insérées dans une fenêtre (211) et dont les faces frontales forment la seconde moitié des orifices de traversée (23), cependant qu'au voisinage des orifices de traversée (23) il est prévu sur la face interne du boîtier (2) de tête de levier des surfaces d'appui parallèles (25) pour des joues (32), conformées de façon correspondante, du levier à main (3), si bien que lors du mouvement de pivotement autour de l'axe de rotation (12), on a un assemblage par l'interpénétration de formes entre le levier à main (3) et le boîtier (2) de tête de levier.

4. Dispositif d'actionnement par un levier à main selon une des revendications 1 à 3, caractérisé en ce que dans la zone des orifices de traversée (23), il est prévu sur la face externe de l'enveloppe du boîtier (2) de tête de levier des méplats à peu près circulaires (26), tandis que le levier à main (3) comporte, sur ses zones d'entrée dans le boîtier (2) de tête de levier, des élargissements (33) conformés de façon correspondante, de sorte que dans n'importe quelle position de pivotement, les orifices de traversée (23) sont recouverts.

5. Dispositif d'actionnement par un levier à main selon une des revendications 1 à 4, caractérisé en ce que le capot (22) du boîtier (2) de tête de levier peut être bloqué dans la position d'enfichage avec la partie d'enveloppe (21) par des languettes d'encliquetage (27).

**6.** Dispositif d'actionnement par un levier à main selon une des revendications 1 à 5, caractérisé en ce que le levier à main (3) en forme d'étrier est réalisé d'une seule pièce, de préférence en zinc coulé sous pression.

Fig. 1

Fig. 2

Fig. 3

Fig. 4

Fig.5

22

221

221

26

26

27

27

Fig.6

22

22

27

22

24

26

21

25

25

26

24

24

26

Fig.7

24

21

26

Fig.8

Fig. 9

Fig. 10